# EUROPÄISCHE PATENTSCHRIFT

(11) **EP 4 120 876 B1**
(45) Veröffentlichungstag und Bekanntmachung des Hinweises auf die Patenterteilung: **10.01.2024**
(21) Anmeldenummer: 21710229.2
(22) Anmeldetag: 03.03.2021
(51) Int. Cl.: A47J 27/00, A23L 5/10, H05B 6/54, H05B 6/62, A47J 36/32

(54) **HAUSHALTS-PEF-GARGERÄT**
DOMESTIC PEF COOKING DEVICE
APPAREIL DE CUISSON DOMESTIQUE À PEF

(30) Priorität: 19.03.2020 DE 102020203520
(43) Veröffentlichungstag der Anmeldung: 25.01.2023
(73) Patentinhaber: BSH Hausgeräte GmbH, 81739 München (DE)
(72) Erfinder: HAS, Uwe, 84579 Unterneukirchen (DE); HEIKEL, Barbara, 83278 Traunstein (DE); HIMMEL, Arnulf, 83301 Traunreut (DE); KOCH, Bernhard, 83334 Inzell (DE); STEINBACHER, Manfred, 83334 Inzell (DE); WREHDE, Edith, 83365 Nußdorf (DE)
(86) Internationale Anmeldenummer: PCT/EP2021/055289
(87) Internationale Veröffentlichungsnummer: WO 2021/185580

(56) Entgegenhaltungen:
- EP-A1- 0 772 991
- EP-A1- 1 669 677
- EP-A1- 3 503 678
- WO-A1-2012/125021
- WO-A1-2016/008868
- WO-A1-2020/120784

## Beschreibung

Die Erfindung betrifft ein Haushalts-PEF-Gargerät, aufweisend einen mit Flüssigkeit füllbaren Gargutbehälter mit sich gegenüberliegenden PEF-Elektroden, zwischen die Gargut einbringbar ist, einen PEF-Signalgenerator zum Anlegen von PEF-Signalen an die PEF-Elektroden und eine Steuereinrichtung zum Ansteuern des PEF-Signalgenerators.

PEF ("Pulsed Electric Field")-Garen, d.h., das Garen von Gargut bzw. Lebensmitteln mittels gepulster Spannungspulse ("PEF-Pulsen"), ist grundsätzlich bekannt. Dabei werden die PEF-Pulse an flächige PEF-Elektroden eines Gargutbehälters angelegt, welche aufgrund der Kontaktierung der PEF-Elektroden mit dem Inhalt des Gargutbehälters einen elektrischen Strom durch den Inhalt des Gargutbehälters erzeugen. Der Inhalt umfasst typischerweise flüssiges Gargut wie Suppe oder in ein Wasserbad eingelegtes Gargut. Der erzeugte Strom fließt auch durch das Gargut, wodurch es gegart wird.

Beispielsweise WO 2016/008868 A1 betrifft ein Verfahren zum PEF ("Pulsed Electric Field")-Kochen eines Lebensmittelprodukts in einer Behandlungskammer, wobei die Behandlungskammer zwei gegenüberliegende Wände umfasst, die jeweils eine Elektrode bilden. Das Verfahren umfasst die folgenden Schritte: (a) Platzieren einer Menge des Lebensmittelprodukts, gegebenenfalls in einer umgebenden Flüssigkeit, in der Behandlungskammer zwischen den beiden Elektroden, so dass das Lebensmittelprodukt und / oder die umgebende Flüssigkeit in direktem Kontakt mit den Elektroden stehen; und (b) Anlegen von elektrischen Impulsen, die von einem gepulsten elektrischen Feldgenerator erzeugt werden, an die Elektroden, so dass das Lebensmittelprodukt einem gepulsten elektrischen Feld mit einer Feldstärke von 10 bis 180 V/cm ausgesetzt wird und die Gesamtkochzeit 0,5 bis 1000 s beträgt. Vorzugsweise beträgt die Zahl der Pulse 1 bis 2.000.000, und die Pulse haben jeweils eine Dauer von 1 bis 20000 Mikrosekunden. Das Lebensmittelprodukt und, falls vorhanden, die umgebende Flüssigkeit weisen eine elektrische Leitfähigkeit von 0,01 bis 10 S/m auf. WO 2016/008868 A1 betrifft auch ein Kochsystem, das zum Kochen eines Lebensmittelprodukts gemäß einem solchen Verfahren geeignet ist.

WO 2012/125021 A1 offenbart ein System zum Behandeln eines Nahrungsmittelprodukts mittels PEF ("Pulsed Electric Field"), wobei das System ein Behandlungsgeschirr und eine Kopplungsstation, d.h., eine Andockstation eines PEP-Generators, umfasst; die Behandlungswanne eine erste und eine zweite Durchgangsöffnung, einen abnehmbaren Deckel, eine Masseelektrode, eine Spannungselektrode, eine erste Stromleitung, eine zweite Stromleitung umfasst, wobei sich die erste Stromleitung durch die erste Durchgangsöffnung nach außen erstreckt und die zweite Stromleitung sich durch die zweite Durchgangsöffnung nach außen erstreckt; die Kupplungsstation zur Aufnahme der Behandlungspfanne in Gebrauchsstellung zur Behandlung von Lebensmitteln eingerichtet ist, die Kupplungsstation Verbindungsleitungen zum PEP-Generator derart aufweist, dass in der Gebrauchsstellung der Behandlungswanne ein gepulstes elektrisches Feld vom PEF-Generator auf die Elektroden in der Behandlungswanne übertragen wird.

EP 1 669 677 A1 offenbart ein Kochfeld mit einer Kochfeldplatte zum Abstellen zumindest eines Gargutbehältnisses, die durch zumindest eine Leiste begrenzt ist, und mit zumindest einem Temperatursensor zum Ermitteln einer Garguttemperatur. Um in konstruktiv einfacher Weise eine Temperaturerfassung des Garguts zu ermöglichen ist der Temperatursensor außerhalb der Kochfeldplatte im Bereich der Leiste angeordnet.

EP 0 772 991 A1 offenbart eine sensorgesteuerte Garungseinheit, bestehend aus Gargerät, Sensorik und Kochfeld, wobei ein der sensorgesteuerten Garungseinheit zugeordneter Infrarotsensor kochstellenbezogen leicht erhöht oberhalb des Kochfeldes angeordnet und in einer konstruktiven Funktionseinheit integriert ist, so dass in der sensorgesteuerten Garungseinheit Kochfeld, Gargerät und Sensorik systemhaft miteinander verbunden, aufeinander angepasst und optimiert sind, dass das Gargerät ein Systemtopf mit einem normierten Emissionsfaktor ist, dass der Systemtopf optimierte Topfwand- und Topfboden-Dickenbereiche einhält, und dass der Systemtopf eine angepasste Kontaktstelle zwischen Topfdeckel und Topfrand besitzt.

Bei PEF-Garen, wie auch bei anderen Garverfahren, ist es vorteilhaft, wenn ein Garfortschritt überwachbar ist, z.B. um während des PEF-Garens Betriebsparameter anzupassen (z.B. um eine Art und einen Umfang der Energiezufuhr anzupassen, beispielsweise über eine Variation einer Dauer und/oder Frequenz der PEF-Pulse) um einen Eintritt eines Garendes besonders genau zu ermitteln und/oder um bei einem Eintritt ungeplanter Entwicklungen korrigierend in den Garprozess einzugreifen. Dazu werden häufig Sensoren eingesetzt. Beim Einsatz von Sensoren, die an einem entnehmbaren Gargutbehälter angeordnet sind, tritt dabei das Problem auf, dass die durch die Spannungspulse bereitgestellte Hochspannung (die mehrere hundert Volt betragen kann) über Sensoren nicht in das (übrige) PEF-Gargerät verschleppt werden darf.

Es ist die **Aufgabe** der vorliegenden Erfindung, die Nachteile des Standes der Technik zumindest teilweise zu überwinden und insbesondere eine Möglichkeit bereitzustellen, an einem Gargutbehälter angeordnete Sensoren auf eine betriebssichere und nutzerfreundliche Weise zu betreiben.

Diese Aufgabe wird gemäß den Merkmalen des Anspruchs 1 gelöst. Vorteilhafte Ausführungsformen sind Gegenstand der abhängigen Ansprüche, der Beschreibung und der Zeichnungen.

Die Aufgabe wird gelöst durch ein Haushalts-PEF-Gargerät, aufweisend
- einen mit Flüssigkeit füllbaren Gargutbehälter mit sich gegenüberliegenden PEF-Elektroden, zwischen die Gargut einbringbar ist,
- einen PEF-Signalgenerator zum Anlegen von PEF-Signalen an die PEF-Elektroden,
- eine Steuereinrichtung zum Ansteuern des PEF-Signalgenerators und
- mindestens einen von den PEF-Elektroden beabstandeten, berührungslos messenden IR-Sensor, der mit der Steuereinrichtung verbunden ist,
wobei
- ein Messfleck des IR-Sensors eine Außenseite eines elektrisch leitfähigen Bereichs einer Wandung des Gargutbehälters umfasst, welcher bei gefülltem Gargutbehälter innenseitig durch die Flüssigkeit kontaktierbar ist.

So ergibt sich der Vorteil, dass mit Hilfe der von dem mindestens einen IR-Sensor ausgegebenen Sensorsignale eine Temperatur der in dem Gargutbehälter befindlichen Flüssigkeit mit geringer zeitlicher Latenz und hoher Genauigkeit berührungslos gemessen werden kann. Dabei wird ausgenutzt, dass elektrisch leitfähiges Material auch eine sehr hohe thermische Leitfähigkeit besitzt und dadurch die innenseitig an dem im Messfleck des IR-Sensors liegenden Wandungsbereich anliegende Temperatur der Flüssigkeit mit nur geringem Versatz und geringer zeitlicher Verzögerung an der Außenseite des Wandungsbereichs anliegt.

Dadurch wiederum kann vorteilhafterweise die mittels der Steuereinrichtung in den Gargutbehälter über die PEF-Signale eingegebene Energiezufuhr beruhend auf den Sensorsignalen prozessbegleitend modifiziert, z.B. für eine Temperaturregelung der Flüssigkeit.

Ein weiterer Vorteil besteht darin, dass aufgrund der berührungslosen Messung ein Überschlag der an den PEF-Elektroden anliegenden Hochspannung auf den IR-Sensor, und weiter auf mit dem IR-Sensor galvanisch verbundene Bauteile, sicher vermieden wird.

Das Haushalts-PEF-Gargerät dient auf grundsätzlich bekannte Weise dazu, zwischen den PEF-Elektroden befindliches Gargut durch Stromfluss zu garen oder zu erwärmen.

Die PEF-Elektroden sind elektrisch leitfähig, typischerweise metallisch, und kontaktieren direkt die Flüssigkeit oder das Gargut. Die PEF-Elektroden können plattenförmig ausgebildet ("Kontaktplatten") sein. Sie sind insbesondere parallel zueinander ausgerichtet. Sie können z.B. vertikal ausgerichtet sein.

Die sich gegenüberliegenden PEF-Elektroden sind voneinander elektrisch isoliert und bilden einen Kondensator. Die daran angelegten PEF-Signale sind insbesondere gepulste Hochspannungssignale. Speziell können die PEF-Signale gepulste Wechselspannungs-signal(e) sein.

Die Flüssigkeit kann z.B. Wasser oder eine wasserbasierte Flüssigkeit (z.B. Suppe) sein.

Mittels der Steuereinrichtung lassen sich die PEF-Signale variieren, z.B. in Bezug auf ihre Frequenz, und damit auch ein Energieeintrag in die Flüssigkeit und das Gargut.

Dadurch, dass der mindestens eine IR-Sensor mit der Steuereinrichtung verbunden ist, kann die Steuereinrichtung die abgefühlte Temperatur als Eingangsgröße nutzen, z.B. zur Variation der PEF-Signale (beispielsweise für eine Temperaturregelung) und/oder für eine Situationsüberwachung. So kann die Steuereinrichtung dazu eingerichtet sein, beruhend aus den empfangenden Temperatursignalen oder daraus abgeleiteten Temperaturdaten zu erkennen, ob sich in dem Gargutbehälter überhaupt Flüssigkeit befindet. Dies kann dadurch umgesetzt sein, dass während einer insbesondere anfänglichen Aufheizphase überprüft wird, ob sich die abgefühlte Temperatur innerhalb einer vorgegebenen Zeitdauer ausreichend erhöht (z.B. eine Temperaturdifferenz innerhalb der vorgegebenen Zeitdauer höher ist als ein vorgegebener Schwellwert). Ist dies nicht der Fall, kann auf einen zu niedrigen Füllstand geschlossen werden. Die Steuereinrichtung kann dann mindestens eine Aktion auslösen, z.B. den Garvorgang stoppen und/oder einen Hinweis an einen Nutzer ausgeben.

Unter einem Messfleck kann insbesondere derjenige Bereich an der Außenseite der Wandung verstanden werden, der innerhalb des Sichtfelds eines IR-Sensors liegt. Zumindest ein Messfleck zumindest eines Sensors sollte bei Füllung des Gargutbehälters zumindest bis zu einem Mindestfüllstand vollständig unter dem Niveau der Flüssigkeit in dem Gargutbehälter liegen.

Es ist eine Ausgestaltung, dass zumindest eine PEF-Elektrode einen Bereich der ansonsten elektrisch isolierenden (z.B. aus Kunststoff bestehenden) Wandung darstellt und der Messfleck auf der Außenseite der PEF-Elektrode liegt. So wird der Vorteil eines besonders einfachen und preiswerten Aufbaus erreicht. In anderen Worten ist eine Außenseite zumindest einer PEF-Elektrode für den IR-Sensor von außen sichtbar, und der Messfleck befindet sich an dieser Außenseite. In noch anderen Worten sieht der IR-Sensor von au-ßen auf eine PEF-Elektrode. Zumindest die an ihrer Außenseite den Messfleck bereitstellende PEF-Elektrode ist dadurch unbeweglich an dem Gargutbehälter angeordnet

Es ist eine Ausgestaltung, dass zumindest eine PEF-Elektrode beweglich in dem Gargutbehälter angeordnet ist und eine hinter (d.h., gegenüberliegend der dem Gargut abgewandten Seite) der beweglichen PEF-Elektrode befindliche Fläche der Wandung mindestens einen von elektrisch isolierendem Material umgebenen elektrisch leitfähigen Einsatz aufweist, der bei gefülltem Gargutbehälter innenseitig durch die Flüssigkeit kontaktiert wird und außenseitig in dem Messfleck des IR-Sensor liegt. Durch die Beweglichkeit der zumindest einen PEF-Elektrode wird der Vorteil erreicht, dass sich ein Abstand zwischen zwei gegenüberliegenden PEF-Elektroden gezielt einstellen lässt. Dadurch wiederum kann eine Impedanz an eine Leistungsfähigkeit des Pulsgenerators angepasst werden. Bei dieser Ausgestaltung befindet sich hinter einer beweglichen PEF-Elektroden eine Wand aus elektrisch isolierendem Material, z.B. Kunststoff. In diesem Fall kann der IR-Sensor nicht auf die PEF-Elektrode "sehen". Eine Abfühlung der Temperatur an der Außenseite einer vollflächig elektrisch isolierenden Wand ist nachteilig, weil sich in einer solchen Wand ein hohes Temperaturgefälle einstellt, das eine zuverlässige Messung der Temperatur der Flüssigkeit an der Innenseite der Wand verhindert. Insbesondere können schnelle Temperaturänderungen nicht erfasst werden. Durch den elektrisch leitfähigen Einsatz oder Einsatzelement (auch als "Inlay" bezeichenbar), der bzw. das innenseitig in Kontakt mit der Flüssigkeit in der Gargutbehälter steht, aber nicht als PEF-Elektrode dient, wird demgegenüber eine zuverlässige und schnell reagierende Temperaturabfühlung auch bei beweglicher PEF-Elektrode ermöglicht.

Der Einsatz dient ausschließlich als Träger eines Messflecks für die Erfassung der Temperatur Flüssigkeit mittels des mindestens einen IR-Sensors. Seine Größe kann daher auf die Größe des Messflecks beschränkt sein, oder sogar kleiner sein als der Messfleck. Je kleiner der Einsatz bzw. dessen innenseitige Oberfläche ist, desto geringer ist vorteilhafterweise eine Beeinflussung eines elektrischen Felds innerhalb des Gargutbehälters. Insbesondere entspricht die Außenseite des Einsatzes dem Messfleck oder ist nur geringfügig größer oder kleiner.

Es ist eine Weiterbildung, dass der Einsatz eine Metallplatte ist, z.B. ein Metallblech. Diese kann z.B. in das umgebende elektrisch isolierende Material radseitig angespritzt sein. Sie muss daher nur die Größe des Messflecks haben.

Zur Vermeidung einer thermischen Trägheit ist der Einsatz möglichst dünn.

Es ist eine Ausgestaltung, dass ein Abstand des IR-Sensors von den PEF-Elektroden und oder von dem Einsatz mindestens 1 cm beträgt. Durch eine solche Luftstrecke wird ein Überschlag von Hochspannung auf den IR-Sensor besonders zuverlässig verhindert.

Es ist eine Ausgestaltung, dass eine optische Achse des IR-Sensors senkrecht zu einer Oberfläche des in dem Messfleck des IR-Sensors liegenden elektrisch leitfähigen Bereichs steht. In anderen Worten "sieht" der IR-Sensor senkrecht auf den Messfleck. Diese Anordnung ermöglicht eine besonders zuverlässige Temperaturmessung.

Es ist eine Ausgestaltung, dass das Haushalts-PEF-Gargerät mehrere IR-Sensoren aufweist, deren Messflecke übereinander angeordnet sind. Dadurch wird der Vorteil erreicht, dass ein aktueller Füllstand (auch als Füllstandsniveau oder Pegel bezeichenbar) in dem Gargutbehälter zumindest ungefähr bestimmbar ist. Beispielsweise kann die Steuereinrichtung dazu eingerichtet sein, insbesondere während einer anfänglichen Aufheizphase zu überprüfen, ob sich die an den unterschiedlichen Messflecken bzw. durch die unterschiedlichen IR-Sensoren abgefühlte Temperatur innerhalb einer vorgegebenen Zeitdauer ausreichend erhöht (z.B. eine Temperaturdifferenz innerhalb der vorgegebenen Zeitdauer höher ist als ein vorgegebener Schwellwert). Bei den Messflecken, für die dies der Fall, kann davon ausgegangen werden, dass sie innenseitig zumindest merklich in die Flüssigkeit eintauschen und daher die Flüssigkeit bis zu dem höchsten solchen Messfleck reicht. In analoger Betrachtung kann darauf geschlossen werden, dass die Flüssigkeit nicht bis zu einem Messfleck reicht, bei dem es nicht zu einer ausreichend schnellen Erwärmung kommt. Die Steuereinrichtung kann die Kenntnis über den Füllstand z.B. dazu nutzen, die PEF-Signale zu formen bzw. einen Energieeintrag in den Gargutbehälter anzupassen.

Die Messflecke können z.B. übereinander an einer Außenseite einer gleichen PEF-Elektrode vorhanden sein. Die Messflecke können besonders vorteilhaft auf außenseitigen Oberflächen jeweiliger getrennt übereinander angeordneter Einsätze oder Inlays liegen, da so eine Temperaturquerbeeinflussung zwischen den die Messflecke tragenden Bereichen besonders gering ist.

Mit einer solchen Anordnung von übereinander angeordneten Messflecken kann auch eine Aufschäumerkennung und/oder Überkocherkennung umgesetzt werden: Wird im Laufe eines Garprozesses erkannt, dass sich eine Temperatur eines zunächst oberhalb des Füllstands befindlichen Messflecks merklich erhöht oder innerhalb einer vorgegebenen Zeitdauer merklich erhöht (z.B. plötzlich erhöht), kann davon ausgegangen werden, dass der zugehörige Wandungsbereich nun innenseitig mit Flüssigkeit benetzt ist. Daraus kann eine Schaumbildung und/oder ein Überkochen der Flüssigkeit erkannt werden. Die Steuereinrichtung kann dann z.B. einen Energieeintrag in den Gargutbehälter verringern.

Es ist eine Ausgestaltung, dass das Haushalts-PEF-Gargerät einen vertikal - insbesondere motorisch - beweglichen IR-Sensor aufweist und dazu eingerichtet ist, den IR-Sensor während eines Garprozesses auf unterschiedliche vertikale Positionen zu bewegen, welche vertikal übereinander angeordneten Messflecken entsprechen. Durch zeitlich aufeinanderfolgende Abfühlung oder Messung der an den übereinander angeordneten Messflecken anliegenden Temperatur kann eine zu der oben beschriebenen Anordnung mit mehreren IR-Sensoren, deren Messflecke übereinander angeordnet sind, analoge Funktionalität noch preiswerter bereitgestellt werden.

Es ist eine Ausgestaltung, dass der in dem Sichtfeld des IR-Sensors liegende elektrisch leitfähige Bereich der Wandung an seiner Außenseite mit einer Beschichtung versehen, welche einen hohen spektralen Emissionsgrad aufweist. Dies erhöht eine Zuverlässigkeit und Genauigkeit einer Temperaturbestimmung. Dies beruht auf der Überlegung, dass Metall zumindest in blanker oder geputzter bzw. polierter Form einen nur geringen Emissionsgrad aufweist, aber ein Emissionsgrad über den zu überwachenden Temperaturbereich (bei Kochprozessen typischerweise von etwa 0 °C bis hin zu etwa 100 °C) möglichst konstant und hoch sein.

Es ist eine Ausgestaltung, dass der IR-Sensor (d.h., der IR-Sensor als solcher oder dessen Gehäuse) niederohmig geerdet ist. Dies kann z.B. dadurch umgesetzt sein, dass er mit einer Masseleitung einer ihn betreibenden Elektronik verbunden ist.

Es ist eine Ausgestaltung, dass der IR-Sensor über eine galvanisch trennende Schnittstelle mit der Steuereinrichtung verbunden ist. So können Störungen oder Störsignale vermieden werden, die aufgrund von Influenzerscheinungen auftreten können (z.B. durch feldinduzierte Ladungsverschiebungen erzeugte Spannungen). Ein Beispiel für eine galvanisch trennende Schnittstelle ist die I²C-Bus-Schnittstelle, welche z.B. mittels integrierter Bauelemente vom Typ ADuM2250 oder ADuM2251 der Fa. Analog Devices umsetzbar ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine vereinfachte Skizze eines PEF-Gargeräts gemäß einem ersten Ausführungsbeispiel mit einem Gargutbehälter und einem IR-Sensor;
- Fig.2: zeigt in Schrägansicht eine Skizze des Gargutbehälters und des IR-Sensors des PEF-Gargeräts gemäß dem ersten Ausführungsbeispiel mit dem IRSensor;
- Fig.3: zeigt als Schnittdarstellung in Seitenansicht eine vereinfachte Skizze eines PEF-Gargeräts gemäß einem zweiten Ausführungsbeispiel mit einem Gargutbehälter und einem IR-Sensor; und
- Fig.4: zeigt als Schnittdarstellung in Seitenansicht eine vereinfachte Skizze eines PEF-Gargeräts gemäß einem dritten Ausführungsbeispiel mit einem Gargutbehälter und mehreren IR-Sensoren.

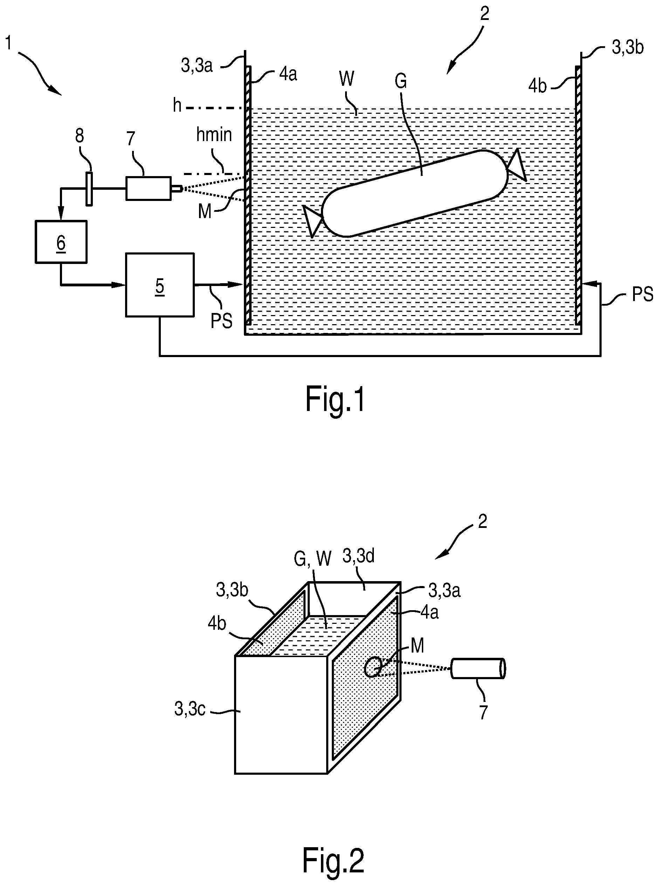

**Fig.1** zeigt als Schnittdarstellung in Seitenansicht eine vereinfachte Skizze eines PEF-Gargeräts 1. Das PEF-Gargerät 1 weist einen Gargutbehälter 2 mit beispielsweise rechteckiger Wandung 3 auf. An zwei gegenüberliegenden Wandungsabschnitten (hier: einer linken Seitenwand 3a und einer rechten Seitenwand 3b) sind eine erste metallische PEF-Elektrode 4a und eine zweite metallische PEF-Elektrode 4b angeordnet. Die PEF-Elektroden 4a und 4b sind plattenförmig ausgebildet und vertikal sowie parallel zueinander ausgerichtet. Die PEF-Elektroden 4a, 4b stellen hier Wandungsbereiche der Wandung 3 dar und liegen innenseitig und außenseitig frei.

An die PEF-Elektroden 4a, 4b sind mittels eines PEF-Signalgenerators 5 gepulste PEF-Hochspannungssignale PS auf grundsätzlich bekannte Weise anlegbar. Der Gargutbehälter 2 ist mit Wasser W und Gargut G (hier z.B. in Form eines Würstchens) füllbar, wobei er hier zumindest bis zu einem minimalen (Soll-)Füllstand hmin gefüllt werden sollte. Das Wasser W bzw. das Gargut 2 kontaktiert die innenseitig freiliegenden PEF-Elektroden 4a, 4b.

Der PEF-Signalgenerator 5 ist auf grundsätzlich bekannte Weise über eine Steuereinrichtung 6 ansteuerbar, so dass dadurch z.B. ein Energieeintrag in das Wasser W und das Gargut G anpassbar ist, beispielsweise über eine Änderung einer Frequenz der PEF-Signale PS.

Das PEF-Gargerät 1 weist ferner einen außenseitig des Gargutbehälters 2 angeordneten, berührungslos temperaturmessenden IR-Sensor 7 auf, der über eine galvanisch trennende Schnittstelle 8 mit der Steuereinrichtung 6 verbunden ist. Dadurch können die von dem IR-Sensor 7 erzeugten Messsignale bzw. darauf weiterverarbeitete, z.B. digitale, Messdaten von der Steuereinrichtung 6 dazu verwendet werden, den Energieeintrag in das Wasser W und das Gargut G anzupassen und/oder eine andere Aktion auszulösen. Der IR-Sensor7 ist niederohmig geerdet.

Der IR-Sensor 7 ist hier senkrecht auf die Außenseite der ersten PEF-Elektrode 4a gerichtet (seine optische Achse steht also senkrecht auf der äußeren Oberfläche der ersten PEF-Elektrode 4a) und dabei mindestens 1 cm von der Oberfläche entfernt. Die erste PEF-Elektrode 4a liegt somit im Sichtfeld des IR-Sensors 7 eine Außenseite. Der auf der äußeren Oberfläche der ersten PEF-Elektrode 4a vorhandene Messfleck, der dort einer Fläche des Sichtbereichs entspricht, ist dabei vollständig auf der ersten PEF-Elektrode 4a angeordnet.

Insbesondere liegt der Messfleck unterhalb des minimalen (Soll-)Füllstands hmin und damit in einem Bereich der ersten PEF-Elektrode 4a, der bei ordnungsgemäßer Füllung des Gargutbehälters 2 auf der Innenseite das Wasser W und/oder das Gargut G kontaktiert. Die Steuereinrichtung 6 kann daher auch dazu eingerichtet sein, zu erkennen, ob der Gargutbehälter 2 zur Durchführung eines Garprozessen (d.h., zum Garen oder Erwärmen des Garguts G) ausreichend gefüllt ist. Dies kann z.B. dadurch umgesetzt sein, dass die Steuereinrichtung 6 erkennt, ob nach Anlegen der PEF-Signale PS die mittels des IR-Sensors 7 abgefühlte Temperatur einen vorgegebenen Schwellwert erreicht oder überschreitet, oder im Fall eines zu geringen aktuellen Füllstands h < hmin nicht erreicht oder überschreitet, ggf. innerhalb einer vorgegebenen Zeitdauer. Vorteilhafterweise entspricht der minimalen Füllstand hmin dazu zumindest ungefähr mit dem oberen Rand des Messflecks M.

**Fig.2** zeigt eine Skizze des Gargutbehälters 2 und des IR-Sensors 7 in Schrägansicht. Die Wandung 3 außerhalb der PEF-Elektroden 4a, 4b, und damit auch die vorderen und rückwärtigen Seitenwände 3c, 3d sowie der Boden, sind aus elektrisch nichtleitendem Material wie Kunststoff, Keramik usw. und isolieren daher die PEF-Elektroden 4a, 4b voneinander.

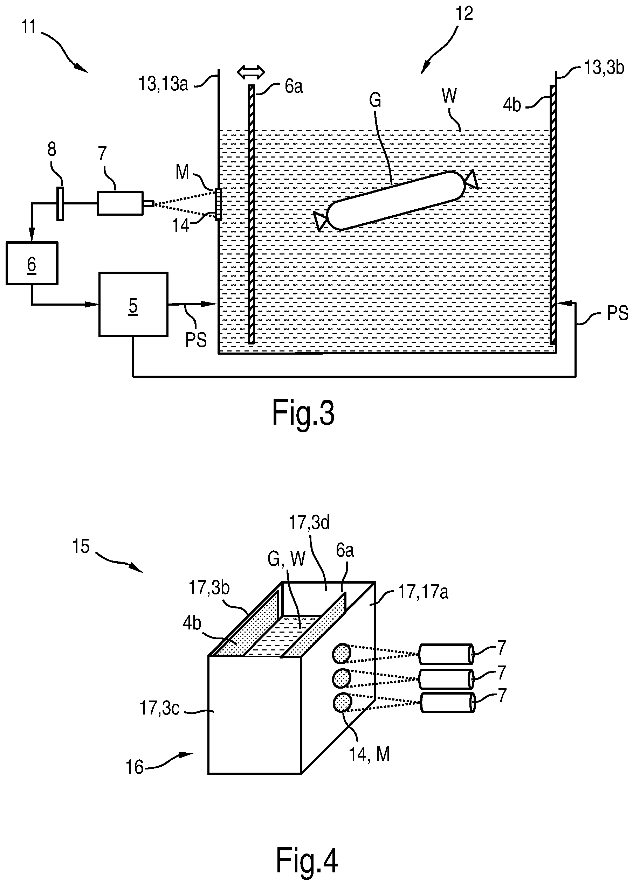

**Fig.3** zeigt als Schnittdarstellung in Seitenansicht eine vereinfachte Skizze eines PEF-Gargeräts 11 mit einem Gargutbehälter 12 und dem IR-Sensor 7. Der Gargutbehälter 12 unterscheidet sich von dem Gargutbehälter 2 dadurch, dass die erste PEF-Elektrode 6a nun frontalverschieblich innerhalb der Wandung 13 angeordnet ist, wie durch den Doppelpfeil angedeutet. Dadurch kann ein Abstand zwischen den beiden PEF-Elektroden 6a, 4b eingestellt werden, z.B. manuell oder motorisch über die Steuereinrichtung 6. Die erste PEF-Elektrode 6a stellt also keinen Wandungsbereich mehr dar.

Vielmehr besteht die hier linke Wandungsseite 13a, die sich hinter der ersten PEF-Elektrode 6a befindet, weitgehend vollflächig aus elektrisch isolierendem Material wie Kunststoff usw., d.h., vollflächig bis auf ein in die linke Wandungsseite 13a eingesetztes Metallblech 14. Das Metallblech 14 kontaktiert innenseitig das Wasser W und ist außenseitig für den IR-Sensor 7 sichtbar. Der Messfleck M des IR-Sensors 7 liegt vorteilhafterweise vollständig auf dem Metallblech. Zur Vermeidung einer merklichen Beeinflussung des innerhalb des Gargutbehälters 12 bei angelegten PEF-Signalen PS bestehenden elektrischen Felds weist das Metallblech 14 vorteilhafterweise eine Fläche auf, die dem Messfleck M entspricht oder nur geringfügig größer ist.

**Fig.4** zeigt als Schnittdarstellung in Seitenansicht eine vereinfachte Skizze eines PEF-Gargeräts 15, von dem nur dessen Gargutbehälter 16 und mehrere (hier beispielhaft drei) vertikal übereinander angeordnete IR-Sensoren 7 eingezeichnet sind. Die IR-Sensoren 7 sind analog zu den PEF-Gargeräten 1 und 11 mit der Steuereinrichtung 6 verbunden.

Das PEF-Gargerät 15 stellt eine Abwandlung des PEF-Gargeräts 11 dahingehend dar, dass der Gargutbehälter 16 in zu den IR-Sensoren 7 analogen Anordnung an z.B. einer Wandungsseite 17a der Wandung 17 drei übereinander angeordnete Einsätze in Form von Metallblechen 14 aufweist. Dadurch ist es vorteilhafterweise z.B. möglich, den aktuellen Füllstand h zumindest ungefähr zu bestimmen, eine Schaumbildung und/oder ein Überkochen zu erkennen, usw.

In einer alternativen, funktional analogen Weiterbildung braucht nur ein IR-Sensor 7 vorhanden zu sein, der, z.B. motorisch mittels der Steuereinrichtung 6 gesteuert, vertikal verfahrbar ist und dadurch die an den mehreren Metallblechen 14 anliegenden Temperaturen nacheinander messen kann.

Selbstverständlich ist die vorliegende Erfindung nicht auf das gezeigte Ausführungsbeispiel beschränkt.

So können die Außenseiten der PEF-Elektrode 4a und/oder des Metallblechs 14 eine zumindest in dem Sichtfeld des IR-Sensors 7 liegende Beschichtung aufweisen, welche einen hohen spektralen Emissionsgrad aufweist.

### Bezugszeichenliste

- 1: PEF-Gargerät
- 2: Gargutbehälter
- 3: Wandung
- 3a-3b: Wandungsseiten
- 4a: Erste PEF-Elektrode
- 4b: Zweite PEF-Elektrode
- 5: PEF-Signalgenerator
- 6: Steuereinrichtung
- 7: IR-Sensor
- 8: Galvanisch trennende Schnittstelle
- 11: PEF-Gargerät
- 12: Gargutbehälter
- 13: Wandung
- 13a: Wandungsseite
- 14: Metallblech
- 15: PEF-Gargerät
- 16: Gargutbehälter
- 17: Wandung
- 17a: Wandungsseite
- G: Gargut
- h: Füllstand
- hmin: Minimaler Füllstand
- PS: PEF-Signal
- W: Wasser

## Patentansprüche

1. Haushalts-PEF-Gargerät (1; 11; 15), aufweisend
- einen mit Flüssigkeit (W) füllbaren Gargutbehälter (2; 12; 16) mit sich gegenüberliegenden PEF-Elektroden (4a, 4b; 6a, 4b), zwischen die Gargut (G) einbringbar ist,
- einen PEF-Signalgenerator (5) zum Anlegen von PEF-Signalen (PS) an die PEF-Elektroden (4a, 4b; 6a, 4b),
- eine Steuereinrichtung (6) zum Ansteuern des PEF-Signalgenerators (5) und
- mindestens einen von den PEF-Elektroden (4a, 4b; 6a, 4b) beabstandeten, berührungslos messenden IR-Sensor (7), der mit der Steuereinrichtung (6) verbunden ist,
wobei
- ein Messfleck (M) des IR-Sensors (7) eine Außenseite eines elektrisch leitfähigen Bereichs (4a; 14) einer Wandung (3; 12; 17) des Gargutbehälters (2; 12; 16) umfasst, welcher bei gefülltem Gargutbehälter (2) innenseitig durch die Flüssigkeit (W) kontaktierbar ist.

2. Haushalts-PEF-Gargerät (1) nach Anspruch 1, wobei zumindest eine PEF-Elektrode (4a, 4b) einen Bereich einer ansonsten elektrisch isolierenden Wandung (3; 12; 17) darstellt und der Messfleck (M) des IR-Sensors (7) auf der PEF-Elektrode (4a) liegt.

3. Haushalts-PEF-Gargerät (11; 15) nach Anspruch 1, wobei
- zumindest eine PEF-Elektrode (6a) beweglich in dem Gargutbehälter (2) angeordnet ist und
- eine hinter der beweglichen PEF-Elektrode (6a) befindliche Fläche (13a; 17a) der Wandung (13; 17) mindestens einen von elektrisch isolierendem Material umgebenen elektrisch leitfähigen Einsatz (14) aufweist, der bei innenseitig durch die Flüssigkeit (W) kontaktierbar ist und außenseitig zumindest teilweise in dem Messfleck (M) des IR-Sensors (7) liegt.

4. Haushalts-PEF-Gargerät (1; 11; 15) nach einem der vorhergehenden Ansprüche, wobei ein Abstand des IR-Sensors (7) von den PEF-Elektroden (4a, 4b; 6a, 6b) und/oder von dem Einsatz (14) mindestens 1 cm beträgt.

5. Haushalts-PEF-Gargerät (1; 11; 15) nach einem der vorhergehenden Ansprüche, wobei eine optische Achse des IR-Sensors (7) senkrecht zu einer Oberfläche des in dem Messfleck (M) des IR-Sensors (7) liegenden elektrisch leitfähigen Bereichs (3a; 14) steht.

6. Haushalts-PEF-Gargerät (1) nach einem der vorhergehenden Ansprüche, aufweisend mehrere IR-Sensoren (7), deren Messflecke (M) übereinander angeordnet sind.

7. Haushalts-PEF-Gargerät (1) nach einem der vorhergehenden Ansprüche, aufweisend einen vertikal beweglichen IR-Sensor (7), wobei das Haushalts-PEF-Gargerät (1) dazu eingerichtet ist, den IR-Sensor (7) auf unterschiedliche vertikale Positionen zu bewegen, die vertikal übereinander angeordneten Messflecken (M) entsprechen.

8. Haushalts-PEF-Gargerät (1) nach einem der vorhergehenden Ansprüche, wobei der in dem Messfleck (M) des IR-Sensors (7) liegende elektrisch leitfähige Bereich (3a; 14) der Wandung (3a; 13a; 17a) an seiner Außenseite mit einer Beschichtung versehen, welche einen hohen spektralen Emissionsgrad aufweist.

9. Haushalts-PEF-Gargerät (1) nach einem der vorhergehenden Ansprüche, wobei der IR-Sensor (7) niederohmig geerdet ist.

10. Haushalts-PEF-Gargerät (1) nach einem der vorhergehenden Ansprüche, wobei der IR-Sensor (7) über eine galvanisch trennende Schnittstelle (8) mit der Steuereinrichtung (6) verbunden ist.

## Claims

1. Household PEF cooking device (1; 11; 15) having
- a cooking product container (2; 12; 16) which can be filled with liquid (W) and comprises PEF electrodes (4a, 4b; 6a, 4b) lying opposite one another, between which a cooking product (G) can be introduced,
- a PEF signal generator (5) for applying PEF signals (PS) to the PEF electrodes (4a, 4b; 6a, 4b),
- a control device (6) for controlling the PEF signal generator (5) and
- at least one IR sensor (7) that measures contactlessly, is provided at a distance from the PEF electrodes (4a, 4b; 6a, 4b) and is connected to the control device (6),
wherein
- a measuring dot (M) of the IR sensor (7) encompasses an outer face of an electrically conductive region (4a; 14) of a wall (3; 12; 17) of the cooking product container (2; 12; 16), which region can be contacted on its inner face by the liquid (W) when the cooking product container (2) is full.

2. Household PEF cooking device (1) according to claim 1, wherein at least one PEF electrode (4a, 4b) represents a region of an otherwise electrically insulating wall (3; 12; 17) and the measuring dot (M) of the IR sensor (7) is located on the PEF electrode (4a).

3. Household PEF cooking device (11; 15) according to claim 1, wherein
- at least one PEF electrode (6a) is movably arranged in the cooking product container (2) and
- a surface (13a; 17a) of the wall (13; 17) located behind the movable PEF electrode (6a) has at least one electrically conductive insert (14) which is surrounded by electrically insulating material, which may be contacted by the liquid (W) on the inner face and which is located on the outer face at least partially in the measuring dot (M) of the IR sensor (7).

4. Household PEF cooking device (1; 11; 15) according to one of the preceding claims, wherein a distance of the IR sensor (7) from the PEF electrodes (4a, 4b; 6a, 4b) and/or from the insert (14) is at least 1 cm.

5. Household PEF cooking device (1; 11; 15) according to one of the preceding claims, wherein an optical axis of the IR sensor (7) stands perpendicularly to a surface of the electrically conductive region (3a; 14) located in the measuring dot (M) of the IR sensor (7).

6. Household PEF cooking device (1) according to one of the preceding claims, having a plurality of IR sensors (7), the measuring dots (M) thereof being arranged one on top of the other.

7. Household PEF cooking device (1) according to one of the preceding claims, having an IR sensor (7) which is vertically movable, wherein the household PEF cooking device (1) is designed to move the IR sensor (7) to different vertical positions which correspond to measuring dots (M) arranged vertically one on top of the other.

8. Household PEF cooking device (1) according to one of the preceding claims, wherein the electrically conductive region (3a; 14) of the wall (3a; 13a; 17a) located in the measuring dot (M) of the IR sensor (7) is provided on its outer face with a coating which has a high spectral emissivity.

9. Household PEF cooking device (1) according to one of the preceding claims, wherein the IR sensor (7) is grounded with low resistance.

10. Household PEF cooking device (1) according to one of the preceding claims, wherein the IR sensor (7) is connected to the control device (6) via a galvanically isolating interface (8).

## Revendications

1. Appareil de cuisson domestique par champ électrique pulsé (PEF) (1, 11, 15) comprenant :
- un récipient de denrées à cuire (2, 12, 16) pouvant être rempli avec un liquide (W) comprenant des électrodes PEF opposées (4a, 4b, 6a, 4b), entre lesquelles la denrée de cuisson (G) peut être introduite,
- un générateur de signaux PEF (5) pour appliquer des signaux PEF (PS) sur les électrodes PEF (4a, 4b, 6a, 4b),
- un dispositif de commande (6) pour exciter le générateur de signaux PEF (5), et
- au moins un capteur IR (7) de mesure sans contact, distant des électrodes PEF (4a, 4b , 6a, 4b), qui est relié au dispositif de commande (6),
dans lequel
- un spot de mesure (M) du capteur IR (7) comprend un côté extérieur d'une région électriquement conductrice (4a, 14) d'une paroi (3, 12, 17) du récipient de denrées à cuire (2, 12, 16) qui peut être mise en contact par le liquide (W) du côté intérieur lorsque le récipient de denrées à cuire (2) est rempli.

2. Appareil de cuisson domestique par PEF (1) selon la revendication 1, dans lequel au moins une électrode PEF (4a, 4b) est constituée d'une région d'une paroi par ailleurs électriquement isolante (3, 12, 17) et le spot de mesure (M) du capteur IR (7) est situé sur l'électrode PEF (4a).

3. Appareil de cuisson domestique par PEF (11, 15) selon la revendication 1, dans lequel
- au moins une électrode PEF (6a) est agencée de façon mobile dans le récipient de denrées à cuire (2),
- une surface (13a, 17a) de la paroi (13, 17) se trouvant derrière l'électrode PEF mobile (6a) comprend au moins une pièce rapportée électriquement conductrice (14) entourée par un matériau électriquement isolant, qui peut être mise en contact par le liquide (W) du côté intérieur et est située du côté extérieur au moins en partie dans le spot de mesure (M) du capteur IR (7).

4. Appareil de cuisson domestique par PEF (1, 11, 15) selon l'une des revendications précédentes, dans lequel une distance du capteur IR (7) aux électrodes PEF (4a, 4b, 6a, 6b) et/ou à la pièce rapportée (14) est d'au moins 1 cm.

5. Appareil de cuisson domestique par PEF (1, 11, 15) selon l'une des revendications précédentes, dans lequel un axe optique du capteur IR (7) est perpendiculaire à une surface de la région électriquement conductrice (3a, 14) se trouvant dans le spot de mesure (M) du capteur IR (7).

6. Appareil de cuisson domestique par PEF (1) selon l'une des revendications précédentes, comprenant plusieurs capteurs IR (7) dont les spots de mesure (M) sont disposés l'un au-dessus de l'autre.

7. Appareil de cuisson domestique par PEF (1) selon l'une des revendications précédentes, comprenant un capteur IR (7) mobile verticalement, dans lequel l'appareil de cuisson domestique par PEF (1) est configuré de manière à déplacer le capteur IR (7) à différentes positions verticales, qui correspondent à des spots de mesure (M) disposés verticalement l'un au-dessus de l'autre.

8. Appareil de cuisson domestique par PEF (1) selon l'une des revendications précédentes, dans lequel la région électriquement conductrice (3a, 14) de la paroi (3a, 13a, 17a) située dans le spot de mesure (M) du capteur IR (7) est pourvue sur son côté extérieur d'un revêtement, qui présente une haute émissivité spectrale.

9. Appareil de cuisson domestique par PEF (1) selon l'une des revendications précédentes, dans lequel le capteur IR (7) est relié à la masse à une basse impédance.

10. Appareil de cuisson domestique par PEF (1) selon l'une des revendications précédentes, dans lequel le capteur IR (7) est relié au dispositif de commande (6) par le biais d'une interface d'isolement galvanique (8).
